Europäisches Patentamt

European Patent Office

Office européen des brevets

(19)

(11) Veröffentlichungsnummer : **0 076 265**
**B1**

(12) EUROPÄISCHE PATENTSCHRIFT

(45) Veröffentlichungstag der Patentschrift :
07.08.85

(51) Int. Cl.⁴ : **G 01 L 23/22, F 02 P   5/04**

(21) Anmeldenummer : 82900625.3

(22) Anmeldetag : 24.02.82

(86) Internationale Anmeldenummer :
PCT/DE 82/00034

(87) Internationale Veröffentlichungsnummer :
WO/8203685 (28.10.82 Gazette 82/26)

(54) VERFAHREN UND VORRICHTUNG ZUM ERKENNEN IRREGULÄRER VERBRENNUNGSVORGÄNGE IN EINER BRENNKRAFTMASCHINE.

(30) Priorität : 15.04.81 DE 3115194
            27.05.81 DE 3121120

(43) Veröffentlichungstag der Anmeldung :
13.04.83 Patentblatt 83/15

(45) Bekanntmachung des Hinweises auf die Patenterteilung : 07.08.85 Patentblatt 85/32

(84) Benannte Vertragsstaaten :
AT BE CH DE FR GB LI NL SE

(56) Entgegenhaltungen :
DE-A- 2 916 591
DE-A- 2 918 420
DE-A- 3 010 324
GB-A- 2 053 351

(73) Patentinhaber : ROBERT BOSCH GMBH
Postfach 50
D-7000 Stuttgart 1 (DE)

(72) Erfinder : Van ZANTEN, Anton
Waldstrasse 15/2
D-7257 Ditzingen 1 (DE)

# Beschreibung

### Stand der Technik

Die Erfindung geht aus von einem Verfahren nach der Gattung des Anspruchs 1 sowie von einer Vorrichtung gemäß der Gattung des Anspruchs 7.

Verbrennungsmotoren mit innerer Verbrennung sind nur scheinbar kontinuierlich arbeitende Maschinen. Zwar sind Drehmoment und Drehzahl quasikontinuierliche Ausgangsgrößen, sie werden jedoch durch eine schnelle Aufeinanderfolge von Einzelprozessen erzeugt.

Im Zuge der Optimierung des Betriebes von Brennkraftmaschinen, insbesondere im Hinblick auf eine Verminderung des Treibstoffverbrauches ist es daher erforderlich, diese Zusammenhänge im einzelnen zu erfassen, um über die Beeinflussung des Einzelprozesses den Gesamtprozeß in der gewünschten Weise beeinflussen zu können.

Voraussetzung hierzu ist die Ermittlung des Zustandes im Inneren der Brennkraftmaschine. Typische Zustandsgrößen sind dabei Druck und Temperatur, die im Falle des idealen Gases den Gesamtzustand angeben. Zwar wird der Betrieb von Motoren mit innerer Verbrennung wesentlich auch von chemischen Prozessen und Stoffveränderungen bestimmt, so daß dieser Betrieb nicht global mit Druck und Temperatur beschreibbar ist, dennoch gibt die Beobachtung von Druck und Temperatur ausreichende Auskunft über die Veränderungen der Zustandsgrößen über den Motorzyklus.

Dabei ist es bekannt, im Brennraum einer Brennkraftmaschine die Erfassung der zeitlichen und räumlichen Ausbreitung des Verbrennungsvorganges, die Erfassung des Zündzeitpunktes, die Erfassung von Einspritzvorgängen sowie die Ausmessung von irregulären Verbrennungen vorzunehmen.

Zu diesen irregulären Verbrennungen gehört auch das sogenannte « Klopfen », das bei Brennkraftmaschinen unter bestimmten Arbeitsbedingungen auftritt. Man versteht hierunter tonfrequente Schwingungen des komprimierten Kraftstoff-Luft-Gemisches, die durch eine Stoßwelle ausgelöst werden. Während dieser Schwingungen ist der Wärmeübergang an Kolben- und Zylinderwänden der Brennkraftmaschine stark erhöht. Dies hat eine schädliche thermische Überlastung dieser Flächen zur Folge, so daß das Klopfen grundsätzlich zu vermeiden ist. Da man jedoch andererseits bestrebt ist, den zur Verfügung stehenden Arbeitsbereich der Brennkraftmaschine möglichst weitgehend auszunutzen, ist es erforderlich, Mittel vorzusehen, die das Klopfen frühzeitig und sicher anzeigen, um auf diese Weise eine Regelung der Brennkraftmaschine realisieren zu können, bei der die Brennkraftmaschine stets kurz unterhalb der Klopfgrenze betrieben wird.

Neben dem Problem, zur Erfassung des Klopfens geeignete Sensoren bereitzustellen, besteht auch das meßtechnische Problem, aus den vom Sensor erfaßten Schwingungen der Brennkraftmaschine das Klopfsignal zuverlässig und störungsfrei herauszulesen, um die Brennkraftmaschine in Abhängigkeit von einem Klopferkennungssignal « Klopfen ja » oder « Klopfen nein » entsprechend regeln zu können.

Aus der DE-A-2 916 591 ist ein Verfahren und eine Vorrichtung zur Feststellung des Klopfens von Brennkraftmaschinen bekannt. Bei dem dort geschilderten Verfahren wird das von einem Klopfsensor erzeugte Signal während eines sogenannten Meßfensters, d. h. eines vorgegebenen Kurbelwellenwinkelbereiches oder eines vorbestimmten Zeitintervalles integriert und das so gewonnene Signalintegral mit einem Mittelwert aus einer Vielzahl von Signalintegralen vorhergehender Verbrennungszyklen verglichen.

Das bekannte Verfahren hat jedoch den Nachteil, daß der Bezugswert aus einer Vielzahl von Signalintegralen gebildet werden muß, was eine bestimmte Meßzeit erfordert, so daß das bekannte Verfahren insgesamt mit einer gewissen Trägheit behaftet ist. Zum anderen kann jedoch auch der Fall eintreten, daß bei der Mittelwertbildung einer Vielzahl von Signalintegralen Signalintegrale von klopfenden und nicht klopfenden Verbrennungen gemeinsam erfaßt werden, so daß als Bezugssignal nicht mehr eindeutig das Signal einer klopfenden oder nicht klopfenden Verbrennung sondern vielmehr ein Mischsignal zur Verfügung steht.

Weiterhin ist aus DE-A-2 918 420 eine Vorrichtung zum Erkennen des Klopfens bei Brennkraftmaschinen bekannt, wobei einem Klopfsensor eine Demodulatorschaltung zur Gewinnung des zeitlichen Amplitudenverlaufs des Klopfsignales nachgeschaltet ist, der weiterhin ein Tiefpaß nachgeschaltet ist, und wobei eine Vergleichsschaltung zum Vergleich der Ausgangssignale des Tiefpasses und der Demodulatorschaltung vorgesehen ist. Auch hier wird das Vergleichssignal durch einen Tiefpaß integriert, was eine bestimmte Meßzeit erfordert, so daß das Verfahren insgesamt mit einer Trägheit behaftet ist.

### Vorteile der Erfindung

Das erfindungsgemäße Verfahren mit den kennzeichnenden Merkmalen des Patentanspruches 1 und die erfindungsgemäße Vorrichtung mit den Merkmalen des kennzeichnenden Teils des Anspruchs 7 haben demgegenüber den Vorteil, daß durch Vergleichen aufeinanderfolgender Verbrennungszyklen eine schnelle Anzeige einer irregulären Verbrennung möglich ist, so daß eine darauf aufbauende Regelung ein günstiges dynamisches Verhalten aufzeigt. Außerdem wird im erfindungsgemäßen Verfahren beim Vergleichen von Meßwert und Bezugswert zwischen den Zuständen « reguläre Verbrennung » und « irreguläre Verbrennung » unterschieden, so daß hinsichtlich des Bezugswertes klargestellt ist, ob erkannt werden soll, daß aus dem Zustand einer regulären Verbrennung nunmehr eine irreguläre Verbrennung auftritt oder bei Vorliegen einer irregulären Verbrennung erkannt werden soll, ob diese beendet ist.

Zeichnung

Das erfindungsgemäße Verfahren und die Vorrichtung ist anhand von Zeichnungen veranschaulicht und in der nachfolgenden Beschreibung näher erläutert. Es zeigen : Figur 1 eine Vorrichtung zur Durchführung des erfindungsgemäßen Verfahrens ; Figur 2 ein Diagramm zur Erläuterung des erfindungsgemäßen Verfahrens, Figur 3 eine weitere erfindungsgemäße Vorrichtung zur Durchführung des erfindungsgemäßen Verfahrens.

Beschreibung des Ausführungsbeispieles

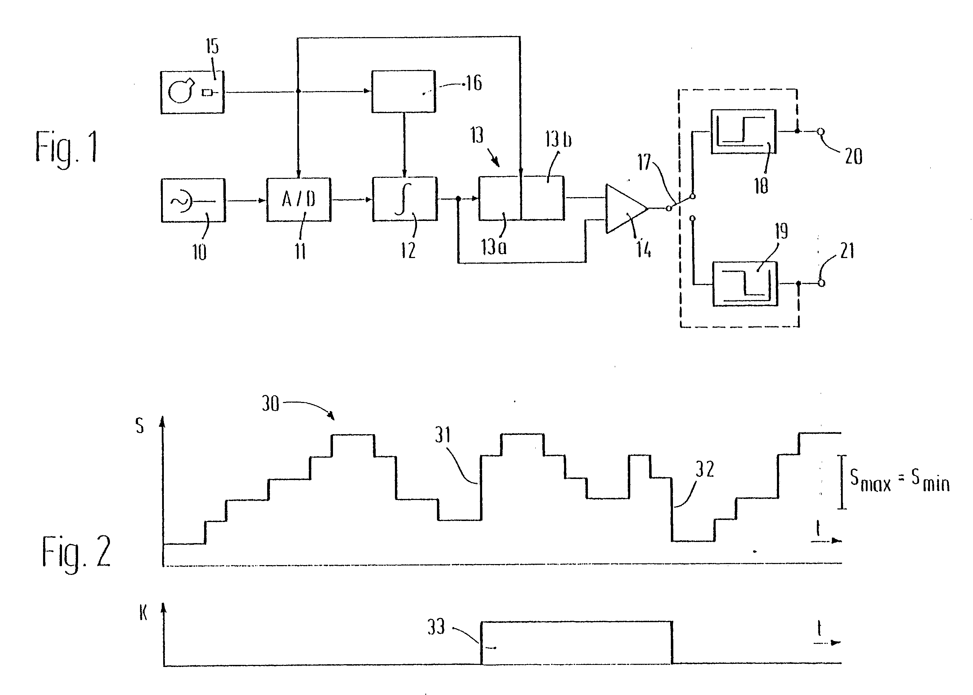

In Figur 1 ist mit 10 ein Sensor bezeichnet, wie er zur Erfassung von den Verbrennungsverlauf einer Brennkraftmaschine charakterisierenden Parametern verwendet wird. Ein derartiger Sensor kann beispielsweise ein piezoelektrischer Sensor sein, der auf die Schwingungen der Brennkraftmaschine bzw. Beschleunigungssignale reagiert, der Verbrennungsverlauf in der Brennkraftmaschine kann jedoch auch in an sich bekannter Weise über die Messung der Brennraumtemperatur, des Brennraumdrucks oder des Brennraumlichtes erfolgen. Das Ausgangssignal des Sensors 10 wird einem Analog-Digital-Wandler 11 zugeleitet, der an einen Integrator 12 angeschlossen ist, der wiederum mit einem Eingang eines Schieberegisters 13 verbunden ist. Das Schieberegister 13 ist in Figur 1 nur schematisch dargestellt und weist zwei Speicherplätze 13a und 13b auf, wobei der Ausgang des Speicherplatzes 13b an einen Eingang eines Vergleichers 14 angeschlossen ist, dessen anderer Eingang mit dem Ausgang des Integrators 12 verbunden ist. Ferner ist in der Vorrichtung gemäß Figur 1 ein Bezugsmarkengenerator 15 vorgesehen, der beispielsweise als Zahngeber oder dgl. an der Kurbelwelle der Brennkraftmaschine ausgebildet sein kann. Der Bezugsmarkengenerator 15 ist an Steuereingänge des Analog-Digital-Wandlers 11, des Schieberegisters 13 sowie einer Zeitsteuerung 16 angeschlossen, die wiederum mit dem Steuereingang des Integrators 12 verbunden ist. Der Ausgang des Vergleichers 14 führt auf einen Umschalter 17, über den das Ausgangssignal des Vergleichers 14 entweder auf eine Schwellwertstufe 18 oder eine Schwellwertstufe 19 schaltbar ist, die eine Ausgangsklemme 20 bzw. 21 aufweisen. Das Ausgangssignal der Schwellwertstufen 18, 19 dient schließlich zum Umschalten des Umschalters 17.

Die Wirkungsweise der in Figur 1 dargestellten Vorrichtung ist wie folgt : Das vom Sensor 10 kommende Signal wird zunächst im Analog-Digital-Wandler 11 im Takte des Brennraumzyklus gewandelt und alsdann im Integrator 12 aufintegriert. Die Integrationszeit des Integrators 12 wird dabei von der Zeitsteuerung 16 bestimmt, die wiederum von dem Bezugsmarkengenerator 15 gesteuert wird. Auf diese Weise ist es möglich, den Integrator 12 entweder in einem vorgegebenen Kurbelwellenwinkelbereich oder einem vorgegebenen Zeitbereich, beginnend mit einem bestimmten Kurbelwellenwinkel wirksam werden zu lassen, so daß eine Meßphase entsteht, die man üblicherweise als Meßfenster bezeichnet. Das im Meßfenster aufintegrierte Sensorsignal wird danach in den ersten Speicherplatz 13a des Schieberegisters 13 eingelesen. Erscheint nun die nächste Bezugsmarke vom Bezugsmarkengenerator 15, wird dieser Wert vom Speicherplatz 13a in den Speicherplatz 13b weitergeschoben und in den Speicherplatz 13a ein neues Signalintegral eingelesen. An den Eingängen des Vergleichers 14 liegen damit zwei Signalintegrale aufeinanderfolgender Zyklen der Brennkraftmaschine. Im Falle einer regulären Verbrennung ist der Umschalter 17 in der in Figur 1 dargestellten Stellung. Damit gelangt das Ausgangssignal des Vergleichers 14 auf die Schwellwertstufe 18. In dieser Schwellwertstufe 18 wird untersucht, ob das jeweils gemessene Signalintegral um einen vorbestimmten Betrag gegenüber dem vorausgegangenen Wert angestiegen ist oder nicht. Bleibt der Anstieg des Signalintegrales unterhalb der in der Schwellwertstufe 18 vorgegebenen Schwelle, wird weiterhin eine reguläre Verbrennung erkannt und an der Ausgangsklemme 20 erscheint kein Signal. Sobald jedoch die Differenz des jeweils gemessenen Signalintegrals um mehr als den vorbestimmten Schwellwert gegenüber dem vorausgegangenen Signalintegral angewachsen ist, erscheint am Ausgang der Schwellwertstufe 18 ein Signal, womit einmal an der Ausgangsklemme 20 angezeigt wird, daß nunmehr eine irreguläre Verbrennung vorliegt und andererseits der Umschalter 17 umgelegt wird. Das Ausgangssignal des Vergleichers 14 gelangt nunmehr auf die Schwellwertstufe 19, in der in analoger Weise untersucht wird, ob das gemessene Signalintegral um mehr als einen in der Schwellwertstufe vorgegebenen Betrag gegenüber dem jeweils vorausgehenden Signalintegral abgesunken ist oder nicht. Solange das Signal weiter ansteigt oder um weniger als die vorgegebene Schwelle gegenüber dem vorausgegangenen Signalintegral absinkt, erscheint am Ausgang der Schwellwertstufe 19 und damit der Ausgangsklemme 21 kein Signal. Überschreitet jedoch die Signalabnahme den vorgegebenen Wert, wird der Ausgang der Schwellwertstufe 19 aktiviert, an der Ausgangsklemme 21 erscheint ein Signal und der Umschalter 17 wird wieder umgelegt, wodurch insgesamt erkannt wird, daß die irreguläre Verbrennung nunmehr beendet ist.

Durch die in Figur 2 dargestellten Diagramme kann das erfindungsgemäße Verfahren weiter verdeutlicht werden. In Figur 2 ist einmal das Signalintegral S über der Zeit t und zum anderen ein Erkennungssignal K für eine irreguläre Verbrennung, wie es beispielsweise an der Ausgangsklemme 21 abgenommen werden kann.

über der Zeit t aufgetragen. Die Stufen im zeitlichen Verlauf des Signalintegrals repräsentieren dabei die jeweiligen Meßintervalle, die in der Form von Meßfenstern in jedem Verbrennungszyklus liegen. Dabei ist ferner am rechten Rand der Schwellert $S_{max}$; $S_{min}$ aufgetragen, der das Maß des Anstiegs bzw. Abfall des Signalintegrals angibt, bei dem das Auftreten einer regulären bzw. irregulären Verbrennung erkannt wird. Der Einfachheit halber sind diese Schwellwerte in Figur 2 gleich groß gewählt. Es versteht sich jedoch, daß diese Schwellwerte auch unterschiedlich gewählt werden können, insbesondere der Anstiegswert $S_{max}$ größer als der Abfallwert $S_{min}$.

Bei dem Verlauf 30 des Signalintegrals S über der Zeit t in Figur 2 wird zunächst davon ausgegangen, daß eine reguläre Verbrennung vorliegt. Der Verlauf 30 steigt nunmehr langsam an und fällt dann wieder ab, ohne daß jedoch der Schwellwert $S_{max}$ überschritten wird. Erst beim Anstieg 31 wird die Schwelle $S_{max}$ überschritten, so daß das Erkennungssignal 33 ausgelöst wird. Dieses Erkennungssignal 33 dauert nun solange an, bis das Signalintegral S — wie oben beschrieben — um mehr als den vorgegebenen Schwellwert $S_{min}$ abgefallen ist. Dies ist in Figur 2 erst bei 32 der Fall, so daß an dieser Stelle das Erkennungssignal 33 verschwindet.

Mit dem erfindungsgemäßen Verfahren wird daher insgesamt eine zuverlässige Erkennung von irregulären Verbrennungen realisiert, wobei sowohl Anfang wie Ende der irregulären Verbrennung schnell und präzise angezeigt werden.

Es versteht sich dabei von selbst, daß die in Figur 1 dargestellte Vorrichtung zur Durchführung des erfindungsgemäßen Verfahrens nur schematisch und beispielhaft angeführt ist und daß das erfindungsgemäße Verfahren auch mit einer Vielzahl anderer Vorrichtungen durchführbar ist, insbesondere mit einem Mikrocomputer. Damit ist es selbstverständlich auch möglich, nicht nur einen Sensor 10 an einem Zylinder der Brennkraftmaschine sondern auch mehrere Sensoren an den mehreren Zylindern einzusetzen, die über eine geeignete Multiplex-Schaltung abgefragt werden.

Bei der Messung des Klopfens von Brennkraftmaschinen werden üblicherweise Geber eingesetzt, die Motorschwingungen erfassen. Hierzu werden diese Geber auf die bekannte tonfrequente Klopffrequenz ausgelegt. Das von diesen Gebern abgegebene Signal wird mit einem Referenzsignal, das die Klopfschwelle bildet, verglichen. Bei dem erfindungsgemäßen Verfahren wird das der Klopfschwelle entsprechende Referenzsignal dadurch gewonnen, daß das während eines Verbrennungszyklus auftretende Nutzsignal gespeichert wird und während des folgenden Verbrennungszyklus als Referenzsignal verwertet wird. Damit ist eine schnelle Anpassung der Klopfschwelle an das jeweilige Hintergrundgeräusch möglich. Um eine genauerer Messung zu erhalten und das Klopfverhalten jedes Zylinders getrennt bewerten zu können, wird der Verbrennungszyklus in mehrere Meßzyklen eingeteilt, deren Zahl der Anzahl der Zylinder entsprechen. Die den jeweiligen Zylindern entsprechenden Nutzsignale werden getrennt gespeichert. Beim nächsten Verbrennungszyklus werden die den jeweiligen Meßzyklen enstsprechenden Signale, nämlich jetzt auftretendes Nutzsignal und vorheriges Nutzsignal, jetzt Referenzsignal, miteinander verglichen. Falls eine klopfende Verbrennung auftritt, soll·das Nutzsignal nicht gespeichert werden, sondern das bei auftretender klopfender Verbrennung benutzte Referenzsignal soll auch bei dem entsprechenden Meßzyklus des nächsten Verbrennungszyklus und gegebenenfalls der folgenden verwandt werden.

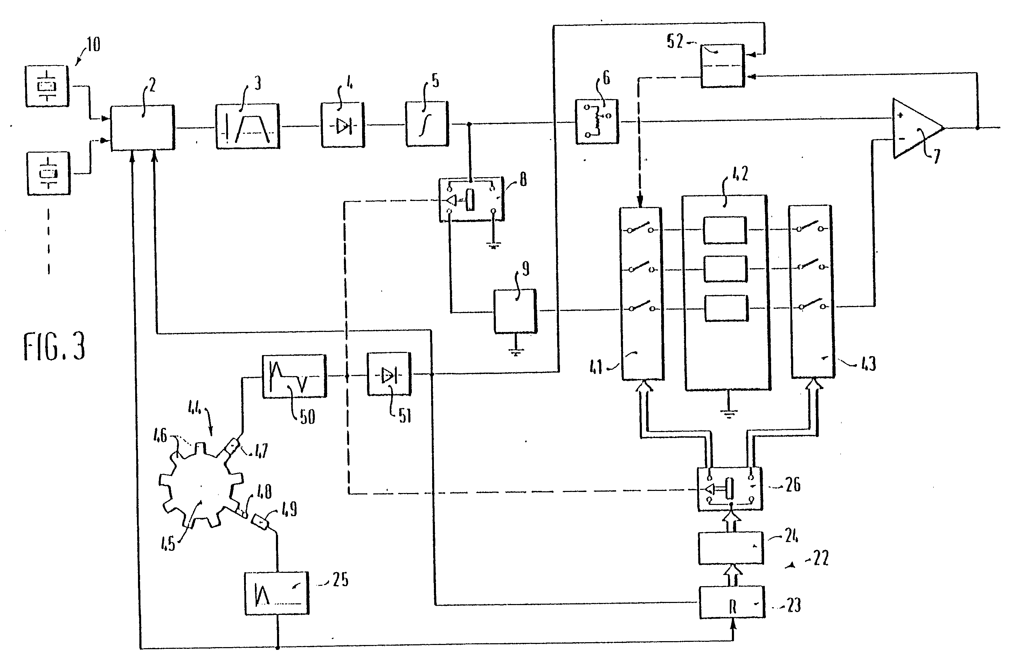

Bei dem in der Figur 3 dargestellten Ausführungsbeispiel des erfindungsgemäßen Verfahrens sind mehrere Klopfsensoren 10 über einen Multiplexer 2, ein Filter 3, das als Hoch- oder Bandpaß ausgebildet sein kann, mit einer Demodulatorschaltung 4 verbunden. Der Ausgang der Demodulatorschaltung 4 ist an eine Integrierstufe 5 angeschlossen, die wiederum über Mittel zur Verschiebung des Signalpegels 6, die als Spannungsteiler ausgebildet sein können, auf den einen Eingang einer vorzugsweise als Komparator ausgebildeten Vergleichsschaltung 7 geführt ist. Der Ausgang der Integrierstufe 5 ist außerdem über einen Schalter 8 mit einem Zwischenspeicher 9 verbunden. Der Ausgang des Zwischenspeichers 9 ist mit der zweiten Schalteinrichtung 41 verbunden, deren Ausgänge auf eine Speichereinrichtung 42 geführt sind. Die Ausgänge der Speichereinrichtung 42 sind über die erste Schalteinrichtung 43 mit einem weiteren Eingang der Vergleichsschaltung 7 verbunden. Zur Festlegung der Meßzyklen wird eine Geberanordnung 44 verwandt, die eine vorzugsweise mit der Kurbelwelle einer Brennkraftmaschine verbundene Zahnscheibe 45 aufweist, auf der umfangsseitig Zähne 46 angebracht sind. Die Zähne 46 werden durch einen ersten Aufnehmer 47 abgetastet, der optisch oder induktiv arbeitet oder auf einem anderen Prinzip beruht. Eine Bezugsmarke 48 ist ebenfalls auf der Scheibe 45 angeordnet und wird durch einen zweiten Aufnehmer 49 abgetastet. Der erste Aufnehmer 47 ist mit einer ersten Impulsformerstufe 50 verbunden, deren Ausgang über einen Gleichrichter 51 an eine Ansteuerstufe 22 angeschlossen ist. Die Ansteuerstufe 22 ist als Zähler 23 mit nachfolgender Dekodierstufe 24 ausgebildet. Der Ausgang des Gleichrichters 51 ist auf den Zähleingang des Zählers 23 geführt. Der zweite Aufnehmer 49 ist mit einer zweiten Impulsformerstufe 25 verbunden, deren Ausgang auf den Reset-Eingang des Zählers 23 geführt ist. Die Ausgänge der Dekodierstufe 24 steuern über Schaltmittel 26 die Schalter der ersten und der zweiten Schalteinrichtung 43 und 41 an. Die Schaltmittel 26 werden ebenso wie der Schalter 8 vom Ausgang der ersten Impulsformerstufe 50 betätigt. Die Ausgänge des Gleichrichters 51 und der zweiten Impulsformerstufe 25 sind auf den Multiplexer 2 geführt. Der Ausgang der Vergleichsschaltung 7 ist mit dem ersten Eingang eines Flipflops 52 verbunden, während der zweite Eingang am Ausgang des Gleichrichters 51 liegt. Die Betätigung der Schalter der zweiten Schalteinrichtung 41 erfolgt außer über die Schaltmittel 26 auch noch mit Hilfe des Ausgangssignals des Flipflops 52.

Die Wirkungsweise der in der Figur dargestellten Vorrichtung ist wie folgt:

Über den Multiplexer 2 wird in Abhängigkeit von der Zylindererkennung, die mit Hilfe der Geberanordnung 44 und den Impulsformerstufen 50 und 25 erfolgt, der jeweilige Klopfsensor 10 an das Filter 3 angeschlossen. Durch die Filterung im Filter 3 werden die unerwünschten Frequenzen im Sensorsignal unterdrückt. In der Demodulatorschaltung 4, die als Gleichrichter ausgebildet sein kann, wird das gefilterte Sensorsignal gleichgerichtet. Das so behandelte Signal wird in der Integrierstufe 5 aufintegriert und über die Mittel zur Verschiebung des Pegels 6, die den Wert des Integrals um einen bestimmten Betrag verringern können, dem nicht invertierenden Eingang der Vergleichsschaltung 7 zugeleitet.

Ein Verbrennungszyklus wird in mehrere Meßzyklen und zwar in eine der Zahl der Zylinder entsprechende Zahl von Meßzyklen eingeteilt. Zur Bestimmung der Meßzyklen und zur Zuordnung der einzelnen Zylinder zu den Meßzyklen dienen die Geberanordnung 44 und die Impulsformerstufen 50 und 25. Die Zahnscheibe 45 dreht sich mit der Kurbelwelle. Jeweils beim Passieren einer Zahnkante der Zähne 46 am Aufnehmer 47 gibt dieser ein elektrisches Signal ab. In der ersten Impulsformerstufe 50 wird bei anlaufender Kante der Zähne ein positiver Impuls und bei ablaufender Kante ein negativer Impuls gebildet. Durch Verschiebung des Aufnehmers 47 gegenüber der Zahnscheibe 45 ist es möglich, daß die erste Impulsformerstufe 50 dann einen positiven Impuls abgibt, wenn in einem Zylinder der Kolben während eines Verbrennungszyklus z. B. OT erreicht. Auf diese Weise wird eine feste Zuordnung in Abhängigkeit vom Kurbelwinkel hergestellt. Auf der Zahnscheibe 45 ist zusätzlich noch eine Bezugsmarke 48 angebracht, die in Zusammenwirkung mit dem zweiten Aufnehmer 49 steht. Die Bezugsmarke 48 verursacht am Ausgang der zweiten Impulsformerstufe 25 dann einen positiven Impuls, wenn die Kurbelwelle einen fest einstellbaren Winkel erreicht hat. Der Winkel kann z. B. so eingestellt werden, daß die Impulsformerstufe 25 dann einen positiven Impuls abgibt, wenn der Kolben z. B. im Zylinder eins OT erreicht. Durch die feste Zündfolge liegt dann fest, zu welchem Zylinder der nächste positive Impuls am Ausgang der ersten Impulsformerstufe 50 gehört. Diese Ausführung der Zylindererkennung ist nur beispielhaft angegeben, es können auch andere bekannte Möglichkeiten angewendet werden. Auch kann die Form der Impulse eine andere sein, z. B. könnte der Beginn des Meßzyklus durch eine positive Flanke, das Ende durch eine negative Flanke angezeigt werden.

Der positive Impuls am Ausgang der ersten Impulsformerstufe 50 markiert den Beginn eines Meßzyklus, während der negative Impuls das Ende eines Meßzyklus angibt. Der Schalter 8 wird bei einem positiven Impuls in der Weise betätigt, daß eine Verbindung zwischen der Integrierstufe 5 und dem Zwischenspeicher 9 hergestellt wird. Bei einem negativen Impuls wird diese Verbindung getrennt und die Integrierstufe wird mit ihrem Ausgang auf Masse gelegt.

Passiert ein Kolben während eines Verbrennungszyklus den oberen Totpunkt, so gibt die Impulsformerstufe 50 einen positiven Impuls ab. Dadurch wird die Integralbildung in der Integrierstufe 5 gestartet, da der Schalter 8 den Ausgang der Integrierstufe 5 mit dem Zwischenspeicher 9 verbindet und so der Ausgang nicht mehr auf Masse liegt. Der Wert des Integrals wird vom Zwischenspeicher 9, der als « Sample-and-Hold » ausgebildet sein kann, festgehalten. Die erste und zweite Schalteinrichtung 41, 43 werden von der Ansteuerstufe 22 gesteuert. Dazu werden die positiven Impulse am Ausgang der ersten Impulsformerstufe 50, die negativen Impulse werden durch den Gleichrichter 51 unterdrückt, auf den Zähleingang des Zählers 23 geführt. Die positiven Impulse am Ausgang der zweiten Impulsformerstufe 25 werden auf den Reset-Eingang des Zählers 23 gegeben, so daß der Zähler 23 durch diese auf Null zurückgesetzt wird. Nach der oben beschriebenen Weise ist das Ausgangssignal des Zählers 23 bzw. des Dekodierers 24 repräsentativ für den Zylinder, zu welchem der gerade durchgeführte Meßzyklus gehört. Der positive Impuls am Ausgang der ersten Impulsformerstufe 50 bewirkt auch, daß die Schaltmittel 26 derart geschaltet werden, daß der Ausgang der Dekodierstufe 24 mit der ersten Schalteinrichtung 43 verbunden ist. Die Schalteinrichtungen 41 und 43 und die Speichereinrichtung 42 weisen jeweils eine der Anzahl der Zylinder entsprechende Zahl von Schaltern bzw. Speichern auf. Während des Meßzyklus steuert der Ausgang der Dekodierstufe 24 denjenigen Schalter der ersten Schalteinrichtung 43 in den leitenden Zustand, der zu dem jeweiligen Meßzyklus bzw. Zylinder gehört. Über die erste Schalteinrichtung 43 liegt dann der entsprechende Speicher der Speichereinrichtung 42 am invertierenden Eingang der Vergleichsschaltung 7, wobei das Ausgangssignal der Speichereinrichtung 42 als Referenzsignal dient. Ist die Vergleichsschaltung 7 als Komparator ausgebildet, so liegt sein Ausgang auf Null, wenn das Nutzsignal kleiner ist als das Referenzsignal und auf 1, wenn das Nutzsignal größer ist als das Referenzsignal. Der Zustand 1 am Ausgang der Vergleichsschaltung 7 bedeutet dann, daß eine klopfende Verbrennung vorliegt, da das Nutzsignal die dem Referenzsignal entsprechende Klopfschwelle übersteigt. Der negative Impuls am Ausgang der ersten Impulsformerstufe 50, der das Ende eines Meßzyklus angibt, bewirkt einen Abbruch der Integralbildung in der Integrierstufe 5, da deren Ausgang über den Schalter 8 auf Masse gelegt wird. Weiterhin werden durch den negativen Impuls die Schaltmittel 26 in der Weise betätigt, daß nunmehr die zweite Schalteinrichtung 41 mit der Dekodierstufe 24 verbunden ist. Der dem Ausgang der Dekodierstufe 24 entsprechende Schalter der zweiten Schalteinrichtung 41 wird angesteuert und der Ausgang des Zwischenspeichers 9 wird mit dem dem gerade durchgeführten Meßzyklus entsprechenden Speicher der Speichereinrichtung 42 verbunden. Diese Schaltung bewirkt, daß der im Zwischenspeicher 9 vorhandene Wert des Nutzsignals des gerade durchgeführten Meßzyklus in dem dem Zylinder entsprechenden Speicher der Speichereinrichtung 42 gespeichert wird. Bei der nächsten Verbrennung in demselben Zylinder steht dieses Signal als Referenzsignal zum Vergleich mit dem nächsten Nutzsignal zur Verfügung.

Liegt eine klopfende Verbrennung vor, so darf das dann auftretende Nutzsignal nicht in die Speichereinrichtung 42 gelangen, da sonst die Messungen verfälscht werden. Daher ist ein Flipflop 52 vorgesehen, dessen Ausgang die zweite Schalteinrichtung 41 vorrangig in der Weise steuert, daß die Verbindung zwischen Zwischenspeicher 9 und Speichereinrichtung 42 unterbrochen ist, wenn am Ausgang der Vergleichsschaltung 7 das Erkennungssignal für klopfende Verbrenung austritt. Der im Zwischenspeicher 9 gespeicherte Wert kann dann nicht auf die Speichereinrichtung 42 übertragen werden, da das Flipflop 52 bis zu Beginn des nächsten Meßzyklus die Verbindung unterbricht. Der entsprechende Speicher der Speichereinrichtung 42 behält seinen vorher eingeschriebenen Speicherinhalt bei, der dann als Referenzsignal auch für den folgenden Verbrennungszyklus verwandt wird.

Die in diesem Ausführungsbeispiel angegebenen Schaltereinrichtungen, Schaltmittel und Schalter werden vorzugsweise in elektronischer Bauweise ausgeführt.

Bei sprungartiger Zunahme der Drehzahl, des Zündwinkels oder der Last nimmt auch das Hintergrundgeräusch und damit auch die Differenz zwischen Nutz- und Referenzsignal sprungartig zu. Um eine falsche Klopferkennung zu vermeiden, kann das Nutzsignal oder das Referenzsignal in Abhängigkeit von der Drehzahl, der Last oder dem Zündwinkel gesteuert werden. Dies kann durch Verstärker geschehen, die den Speichern der Speichereinrichtung 42 vor- oder nachgeschaltet sind und deren Verstärkungsfaktoren von den angegebenen Größen abhängen. Andererseits kann das Nutzsignal durch drehzahl-, last- oder zündwinkelabhängige Änderung der Mittel zur Verschiebung des Signalpegels 6 angepaßt werden.

## Patentansprüche

1. Verfahren zum Erkennen irregulärer Verbrennungsvorgänge in einer Brennkraftmaschine, bei dem ein den Verbrennungsverlauf charakterisierender Parameter mittels eines Sensors erfaßt, das Sensorsignal in einem vorgegebenen Kurbelwellenwinkelbereich oder Zeitintervall des Verbrennungszyklus zu einem Signalintegral — im folgenden Nutzsignal genannt — integriert und mit einem vorausgegangenen Signalintegral — im folgenden Referenzsignal genannt — verglichen wird, dadurch gekennzeichnet, daß die Signalintegrale einzelner aufeinanderfolgender Verbrennungszyklen miteinander verglichen werden, wobei nach Durchführung des Vergleichs das jeweils zuletzt gemessene Signalintegral als Vergleichgröße für das darauffolgende Signalintegral herangezogen wird, der Anstieg des Signalintegrals um einen ersten vorbestimmten Betrag ($S_{max}$) zum Erkennen des Auftretens einer irregulären Verbrennung herangezogen und der Abfall des Signalintegrals um einen zweiten vorbestimmten Betrag ($S_{min}$) zum Erkennen des Endes einer irregulären Verbrennung herangezogen wird.

2. Verfahren nach Anspruch 1, dadurch gekennzeichnet, daß zum Erkennen des Klopfens einer Brennkraftmaschine ein eine klopfende Verbrennung charakterisierender Parameter mittels eines Klopfsensors erfaßt wird und ein Erkennungssignal abgegeben wird, das mit dem Erkennen des Auftretens einer klopfenden Verbrennung beginnt und mit dem Erkennen des Endes einer klopfenden Verbrennung endet.

3. Verfahren nach Anspruch 2, dadurch gekennzeichnet, daß bei Abgabe des Erkennungssignals für eine klopfende Verbrennung während eines Verbrennungszyklus das bei diesem Verbrennungszyklus verwendete Referenzsignal aus während des folgenden Verbrennungszyklus verwendet wird.

4. Verfahren nach Anspruch 2 oder 3, dadurch gekennzeichnet, daß jedem Zylinder ein getrenntes Nutzsignal bzw. Referenzsignal zugeordnet wird.

5. Verfahren nach Anspruch 4, dadurch gekennzeichnet, daß der Vergleich zwischen jeweiligem Nutzsignal und Referenzsignal innerhalb eines fest einstellbaren Meßzyklus vorgenommen wird, wobei jedem Zylinder ein Meßzyklus zugeordnet wird.

6. Verfahren nach einem der Ansprüche 2 bis 5, dadurch gekennzeichnet, daß das Nutzsignal oder das Referenzsignal in Abhängigkeit von wenigstens einem Betriebsparameter der Brennkraftmaschine, vorzugsweise der Drehzahl, der Last oder dem Zündwinkel, verstärkt oder abgeschwächt wird.

7. Vorrichtung zur Durchführung des Verfahrens nach einem der Ansprüche 2 bis 6, mit einem Klopfsensor (10) zur Erfassung eines eine klopfende Verbrennung charakterisierenden Parameters, mit einem Integrierer (12, 5) zur Integration des Sensorsignales zu einem Nutzsignal, mit einem Bezugsmarkengeber (15,44) und einer durch den Bezugsmarkengeber (15, 44) angesteuerten Zeitsteuerung (16, 50, 8, 2) für den Integrierer (12,5), mit einer Vergleichseinrichtung (14, 7) zum Vergleich des Nutzsignals mit einem Referenzsignal, dadurch gekennzeichnet, daß ein Register (13, 9, 42) zur Zwischenspeicherung des Nutzsignales und Gewinnung des Referenzsignales aus dem Nutzsignal des vorhergehenden Verbrennungszyklus zwischen den Ausgang des Integrierers (12, 5) und einen Eingang der Vergleichseinrichtung (14, 7) geschaltet ist.

8. Vorrichtung nach Anspruch 7, dadurch gekennzeichnet, daß das Register (13) ein Schieberegister mit zwei Speicherplätzen (13a, 13b) ist, dessen Schiebetakt durch den Bezugsmarkengeber (15) festgelegt ist.

9. Vorrichtung nach Anspruch 7 oder 8, dadurch gekennzeichnet, daß ein Umschalter (17) mit seinem Mittelkontakt mit dem Ausgang der Vergleichseinrichtung (14) in Verbindung steht und daß je eine Schwellwertstufe (18, 19) mit einem Schaltkontakt des Umschalters in Verbindung steht, wobei durch das Ausgangssignal einer Schwellwertstufe (18, 19) der Umschalter (17) umgeschaltet wird.

10. Vorrichtung nach Anspruch 7, dadurch gekennzeichnet, daß der Bezugsmarkengeber eine vorzugsweise mit der Kurbelwelle der Brennkraftmaschine verbundene Geberanordnung (44), vorzugsweise eine Zahnscheibe (45) mit einem ersten Aufnehmer (47), ist und daß die Zeitsteuerung (25, 2) zwischen den Ausgang des Klopfsensors (10) und den Eingang des Integrierers (5) geschaltet ist.

11. Vorrichtung nach Anspruch 10, dadurch gekennzeichnet, daß mehrere Klopfsensoren (10) vorgesehen sind, daß die Zeitsteuerung ein Multiplexer (2) für die Klopfsensoren (10) ist und daß die Geberanordnung (44) wenigstens einen Zylinder der Brennkraftmaschine erkennt, vorzugsweise durch eine Bezugsmarke (48) der Zahnscheibe (45) und einen zweiten Aufnehmer (49).

12. Vorrichtung nach Anspruch 11, dadurch gekennzeichnet, daß das Register ein Zwischenspeicher (9) und eine nachgeschaltete Speichereinrichtung (42) ist, daß zwischen den Zwischenspeicher (9) und die Speichereinrichtung (42) eine erste Schalteinrichtung (41) und zwischen die Speichereinrichtung (42) und die Vergleichseinrichtung (7) eine zweite Schalteinrichtung (43) geschaltet ist, wobei durch die Geberanordnung (44) die Schalteinrichtungen (41, 42) so angesteuert werden, daß der Inhalt des Zwischenspeichers (9) zylinderspezifisch auf einen Speicherplatz der Speichereinrichtung (42) und die Vergleichseinrichtung (7) gelangt.

13. Vorrichtung nach Anspruch 12, dadurch gekennzeichnet, daß die Schalteinrichtungen (41, 42) durch eine der Geberanordnung (44) nachgeschaltete Ansteuerstufe (22), vorzugsweise einen Zähler (23), der Ausgangssignale des ersten Aufnehmers (47) zählt und durch Ausgangssignale des zweiten Aufnehmers rückgesetzt wird, und eine nachgeschalteten Dekodierstufe (24), angesteuert werden.

14. Vorrichtung nach Anspruch 12 oder 13, dadurch gekennzeichnet, daß an den Ausgang der Vergleichseinrichtung (7) ein Flip-Flop (52) geschaltet ist, daß an den Ausgang des Flip-Flops (52) die erste Schalteinrichtung (41) geschaltet ist, wobei die Verbindung zwischen dem Zwischenspeicher (9) und der Speichereinrichtung (42) dann unterbrochen wird, wenn das Ausgangssignal der Vergleichseinrichtung (7) eine klopfende Verbrennung anzeigt und dadurch das Flip-Flop (52) setzt, und daß das Flip-Flop (52) durch ein Ausgangssignal der Geberanordnung (44) zurückgesetzt wird.

15. Vorrichtung nach einem der Ansprüche 7 bis 14, dadurch gekennzeichnet, daß zwischen den Klopfsensor (10) und den Integrierer (5) ein gleichanteilunterdrückendes Filter (3), vorzugsweise ein Hochpaß, und eine Demodulatorschaltung (4), vorzugsweise ein Gleichrichter, geschaltet ist.

**Claims**

1. Method of detecting irregular combustion processes in an internal-combustion engine, according to which a parameter characterising the combustion pattern is detected by means of a sensor, the sensor signal is integrated into a signal integral, referred to below as a useful signal, in a predetermined crankshaft-angle range or time interval of the combustion cycle and is compared with a preceding signal integral, referred to below as a reference signal, characterised in that the signal integrals of individual, successive combustion cycles are compared with one another, after the comparison has been made the particular signal integral measured last is used as a comparison quantity for the subsequent signal integral, the increase in the signal integral by a first predetermined amount ($S_{max}$) is used to detect the occurrence of irregular combustion, and the decrease in the signal integral by a second predetermined amount ($S_{min}$) is used to detect the end of irregular combustion.

2. Method according to Claim 1, characterised in that, to detect the knocking of an internal-combustion engine, a parameter characterising knocking combustion is detected by means of a knocking sensor, and the detection signal emitted starts with the detection of the occurrence of knocking combustion and ends with the detection of the end of knocking combustion.

3. Method according to Claim 2, characterised in that, when the detection signal for knocking combustion is emitted during a combustion cycle, the reference signal used in this combustion cycle is also used during the subsequent combustion cycle.

4. Method according to Claim 2 or 3, characterised in that a separate useful signal or reference signal is assigned to each cylinder.

5. Method according to Claim 4, characterised in that the comparison between the particular useful signal and the reference signal is made within a measuring cycle which can be given a fixed setting, a measuring cycle being assigned to each cylinder.

6. Method according to one of Claims 2 to 5, characterised in that the useful signal or the reference signal is amplified or attenuated as a function of at least one operating parameter of the internal-combustion engine, preferably the speed, load or ignition angle.

7. Device for implementing the method according to one of Claims 2 to 6, with a knocking sensor (10) for detecting a parameter characterising knocking combustion, with an integrator (12, 5) for integrating the sensor signal into a useful signal, with a reference-mark generator (15, 44) and a time control (16, 50, 8, 2) controlled by the reference-mark generator (15, 44) and intended for the integrator (12, 5), and with a comparator device (14, 7) for comparing the useful signal with a reference signal, characterised in that a register (13, 9, 42) for the intermediate storage of the useful signal and for obtaining the reference signal from the useful signal of the preceding combustion cycle is inserted between the outputs of the integrator (12, 5) and an input of the comparator device (14, 7).

8. Device according to Claim 7, characterised in that the register (13) is a shift register with two storage locations (13a, 13b), the shift rate of which is fixed by the reference-mark generator (15).

9. Device according to Claim 7 or 8, characterised in that a change-over switch (17) is connected by means of its middle contact to the output of the comparator device (14), and in that a threshold stage (18, 19) is connected to each switch contact of the change-over switch, the change-over switch (17) being changed over by the output signal from a threshold stage (18, 19).

10. Device according to Claim 7, characterised in that the reference-mark generator is a generator arrangement (44) preferably connected to the crankshaft of the internal-combustion engine, preferably a toothed disc (45) with a first pick-up (47), and in that the time control (25, 2) is inserted between the output of the knocking sensor (10) and the input of the integrator (5).

11. Device according to Claim 10, characterised in that several knocking sensors (10) are provided, in that the time control is a multiplexer (2) for the knocking sensors (10), and in that the generator arrangement (44) detects at least one cylinder of the internal-combustion engine, preferably by means of a reference mark (48) on the toothed disc (45) and a second pick-up (49).

12. Device according to Claim 11, characterised in that the register is an intermediate memory (9) and a following storage device (42), and in that a first switching device (41) is inserted between the intermediate memory (9) and the storage device (42) and a second switching device (43) is inserted between the storage device (42) and the comparator device (7), the switching devices (41, 42) being controlled by the generator arrangement (44) in such a way that the content of the intermediate memory (9) arrives, specific to a particular cylinder, at a storage location in the storage device (42) and at the comparator device (7).

13. Device according to Claim 12, characterised in that the switching devices (41, 42) are controlled by a control stage (22) following the generator arrangement (44), preferably by a counter (23), which counts output signals from the first pick-up (47) and which is reset by output signals from the second pick-up, and by a following decoder stage (24).

14. Device according to Claim 12 or 13, characterised in that a flip-flop (52) is connected to the output of the comparator device (7), in that the first switching device (41) is connected to the output of the flip-flop (52), the connection between the intermediate memory (9) and the storage device (42) being broken when the output signal from the comparator device (7) indicates knocking combustion and thereby sets the flip-flop (52), and in that the flip-flop (52) is reset by an output signal from the generator arrangement (44).

15. Device according to one of Claims 7 to 14, characterised in that a steady-component-suppressing filter (3), preferably a high-pass filter, and a demodulator circuit (4), preferably a rectifier, are inserted between the knocking sensor (10) and the integrator (5).

**Revendications**

1. Procédé pour détecter des phénomènes de combustion irréguliers dans un moteur à combustion interne dans lequel on détecte les paramètres caractérisant l'écoulement de la combustion à l'aide d'un capteur, le signal de capteur étant intégré dans une plage d'angle de vilebrequin, prédéterminée ou dans un intervalle de temps prédéterminé du cycle de combustion pour donner une intégrale de signal appelée ci-après signal utile, et qui est comparée à l'intégrale de signal appelée ci-après signal de référence, correspondant au signal précédent, caractérisé en ce que les intégrales de signal des différents cycles de combustion successifs sont comparées entre elles et après la comparaison, l'intégrale du signal chaque fois mesurée en dernier lieu est utilisée comme grandeur de comparaison pour l'intégrale du signal suivant, on utilise la montée de l'intégrale du signal suivant une première valeur prédéterminée ($S_{max}$) pour reconnaître l'arrivée d'une combustion irrégulière et on utilise la chute de l'intégrale du signal d'une seconde valeur prédéterminée ($S_{min}$) pour reconnaître la fin d'une combustion irrégulière.

2. Procédé selon la revendication 1, caractérisé en ce que pour reconnaître le cognement d'un moteur à combustion interne, on détecte un paramètre caractérisant une combustion avec cognement à l'aide d'un capteur de cognement et on fournit un signal de reconnaissance qui commence avec la reconnaissance de l'arrivée d'une combustion de cognement et se termine avec la reconnaissance de la fin d'une combustion avec cognement.

3. Procédé selon la revendication 2, caractérisé en ce que lors de l'envoi du signal de reconnaissance correspondant à une combustion avec cognement au cours d'un cycle de combustion, le signal de référence utilisé pour ce cycle de combustion est également utilisé au cours du cycle de combustion suivant.

4. Procédé selon la revendication 2 ou 3, caractérisé en ce qu'on associe un signal utile ou signal de référence distinct à chaque cylindre.

5. Procédé selon la revendication 4, caractérisé en ce que la comparaison est effectuée entre chaque signal utile et chaque signal de référence à l'intérieur d'un cycle de mesure réglable de façon fixe, un cycle de mesure étant associé à chaque cylindre.

6. Procédé selon l'une des revendications 2 à 5, caractérisé en ce que le signal utile ou le signal de référence est accentué ou atténué en fonction d'au moins un paramètre de fonctionnement du moteur à combustion interne de préférence la vitesse de rotation, la charge ou l'angle d'allumage.

7. Dispositif pour la mise en œuvre du procédé selon l'une des revendications 2 à 6 avec un capteur de cognement (10) pour détecter un paramètre caractérisant une combustion avec cognement, un intégrateur (12, 5) pour intégrer le signal de capteur et donner un signal utile, un capteur de repère de référence (15, 44) et une commande de temps (16, 50, 8, 2) commandée par le capteur de repère de référence (15, 44) pour l'intégrateur (12, 5) et un dispositif de comparaison (14, 7) pour comparer le signal utile à un signal de référence, caractérisé par un registre (13, 9, 42) pour l'enregistrement de façon intermédiaire du signal utile et pour l'obtention du signal de référence à partir du signal utile du cycle de combustion prédéterminé entre la sortie de l'intégrateur (12, 5) et une entrée du dispositif de comparaison (14, 7).

8. Dispositif selon la revendication 7, caractérisé en ce que le registre (13) est un registre à décalage à deux emplacements de mémoire (13a, 13b) dont la cadence de décalage est fixée par le capteur de repère de référence (15).

9. Dispositif selon la revendication 7 ou 8, caractérisé par un inverseur (17) dont le contact médian est relié à la sortie du dispositif de comparaison (14) et en ce qu'un étage à seuil respectif (18, 19) est relié à un contact de commutation de l'inverseur, le signal de sortie d'un étage à seuil (18, 19) commandant l'inversion de l'inverseur (17).

10. Dispositif selon la revendication 7, caractérisé en ce que le capteur de référence est de préférence un dispositif à capteurs (44) associé au vilebrequin du moteur à combustion interne, de préférence un disque à dents (45) avec un premier capteur (47) et en ce que la commande de temps (25, 2) est branchée entre la sortie du capteur de cognement (10) et l'entrée de l'intégrateur (5).

11. Dispositif selon la revendication 10, caractérisé en ce qu'il comporte plusieurs capteurs de cognement (10), en ce que la commande de temps est un multiplexeur (2) pour les capteurs de cognement (10) et en ce que le dispositif à capteurs (44) reconnaît au moins un cylindre du moteur à combustion interne de préférence par un repère de référence (48) du disque à dents (45) et un second capteur (49).

12. Dispositif selon la revendication 11, caractérisé en ce que le registre est un registre intermédiaire (9) et une mémoire (42) en aval, en ce qu'entre la mémoire intermédiaire (9) et la mémoire (42), il est prévu un premier dispositif de commutation (41) et en ce qu'entre la mémoire (42) et le dispositif de comparaison (7), il est prévu un second dispositif de commutation (43), le dispositif à capteurs (44) commandant les dispositifs à commutateur (41, 42) pour que le contenu de la mémoire intermédiaire (9) spécifique à un cylindre arrive à un emplacement de la mémoire (42) et atteigne le dispositif de comparaison (7).

13. Dispositif selon la revendication 12, caractérisé en ce que les dispositifs de commutation (41, 42) sont commandés par un étage de commande (22) en aval du dispositif à capteurs (44), de préférence un compteur (23) dont les signaux de sortie sont comptés par le premier capteur (47) et qui est remis à l'état initial par les signaux de sortie du second capteur, et un étage-décodeur (24) prévu en aval.

14. Dispositif selon la revendication 12 ou 13, caractérisé par un flip-flop (52) relié à la sortie du comparateur (7), en ce que le premier dispositif de commutation (41) est relié à la sortie du flip-flop (52), la liaison entre la mémoire intermédiaire (9) et le dispositif à mémoire (42) étant alors interrompue lorsque le signal de sortie du dispositif de comparaison (7) indique une combustion avec cognement et met ainsi à l'état le flip-flop (52), et en ce que le flip-flop (52) est remis à l'état initial par un signal de sortie du dispositif à capteurs (44).

15. Dispositif selon l'une des revendications 7 à 14, caractérisé en ce qu'entre le capteur de cognement (10) et l'intégrateur (5), il est prévu un filtre de suppression de la partie continue (3) de préférence un filtre passe-haut et un circuit-démodulateur (4) de préférence un redresseur.

Fig.1

Fig.2

FIG.3

0 076 265